# EUROPÄISCHE PATENTSCHRIFT

(11) **EP 1 506 446 B1**
(45) Veröffentlichungstag und Bekanntmachung des Hinweises auf die Patenterteilung: **08.02.2006**
(21) Anmeldenummer: 03729893.2
(22) Anmeldetag: 21.05.2003
(51) Int. Cl.: G02B 21/00

(54) **MIKROSKOPANORDNUNG ZUR INSPEKTION EINES SUBSTRATES**
MICROSCOPE ARRANGEMENT FOR ANALYSING A SUBSTRATE
SYSTEME DE MICROSCOPE POUR ANALYSER UN SUBSTRAT

(30) Priorität: 21.05.2002 DE 10222429
(43) Veröffentlichungstag der Anmeldung: 16.02.2005
(73) Patentinhaber: Infineon Technologies AG, 81669 München (DE)
(72) Erfinder: PEITER, Martin, 01097 Dresden (DE); VOGEL, Mandy, 01109 Dresden (DE)
(74) Vertreter: Epping - Hermann - Fischer
(86) Internationale Anmeldenummer: PCT/DE2003/001644
(87) Internationale Veröffentlichungsnummer: WO 2003/098311

(56) Entgegenhaltungen:
- WO-A-99/21042
- GB-A- 2 140 578
- PATENT ABSTRACTS OF JAPAN vol. 1997, no. 11, 28. November 1997 (1997-11-28) & JP 09 191036 A (OLYMPUS OPTICAL CO LTD), 22. Juli 1997 (1997-07-22)

## Beschreibung

Die vorliegende Erfindung betrifft eine Mikroskopanordnung zur Inspektion eines Substrates, insbesondere eines Halbleiterwafers, eines Flat Panels oder einer Maske bzw. Retikels.

Eine derartige Mikroskopanordnung ist bekannt aus GB-A-2 140 578.

Zur Herstellung von integrierten Schaltungen werden Halbleitersubstrate oder beispielsweise auch Masken bzw. Retikel einer Anzahl von Prozessen unterzogen, in welchen jeweils Schichten aufgebracht, strukturiert oder nachmoduliert werden. Während oder zwischen der Durchführung dieser Prozesse kann es einerseits zu einer Beschädigung der gebildeten Strukturen auf dem Halbleiter- bzw. Glassubstrat kommen oder es werden andererseits durch vermehrte Partikelbildung mit einer anschließenden Ablagerung auf dem Substrat nachteilhafte Verunreinigungen festgestellt. Um solchermaßen entstandene Defekten oder Teilchenbildungen auf dem Substrat zu detektieren und im Falle der Detektion vorbeugende Maßnahmen für nachfolgend hergestellte Substrate einleiten zu können, werden regelmäßig zwischen den jeweiligen Prozessen Defekt- und Partikelkontrollen, sogenannte Inspektionen, durchgeführt.

Bei einer solchen Inspektion ist es das Ziel, die Teilchenablagerung beziehungsweise den Defekt zu klassifizieren, um der jeweiligen Ursache des Problems genauer nachgehen zu können. Darüber hinaus ist es auch das Ziel, für das betreffende Substrat eine Entscheidung über die Weiterverarbeitung herbeizuführen. So könnte beispielsweise auch ein Reinigungsschritt beziehungsweise ein völliges Verwerfen des Substrates in Frage kommen.

Für eine Klassifizierung des Teilchens oder des Defektes ist eine hochauflösende Mikroskopie notwendig. Eine regelmäßige, alle Strukturen auf dem Substrat umfassende Inspektion mit einem hochauflösenden Mikroskop würde allerdings den Herstellungsprozeß erheblich verlangsamen und somit zu einer Erhöhung der Kosten führen. Da ein großer Teil der Defekte und Teilchen makroskopisch, d.h. mit bloßem Auge oder mit einem einfachen Sichtglas erkennbar sind, wird in der Fertigung von Halbleiterprodukten oder Masken/Retikeln der Inspektionsschritt üblicherweise in zwei Unterschritte aufgeteilt:

In einem ersten Unterschritt wird eine sogenannte Schräglichtkontrolle durchgeführt, d.h. an einer ersten Arbeitsstation umfassend eine Beleuchtungsvorrichtung und ein Sichtglas mit, etwa einer Lupe, wird das Substrat unter schräg einfallendem Licht durch das Sichtglas vom Bedienpersonal beobachtet. Das Sichtglas umfaßt gegebenenfalls eine integrierte umschaltbare Vergrößerung. Beispielsweise wird dabei der Einfallswinkel des einfallenden Lichts auf die Substratoberfläche manuell variiert. Dadurch, daß das einfallende Licht entweder in Richtung einer Beugungsordnung oder der Spiegeltreflektion von Substrat wieder ausgestrahlt wird, werden dem Bediener diffus reflektierende Teilchen auf der Oberfläche des Substrates besonders sichtbar. Nach Beendigung dieses ersten Schrittes erstellt der Bediener in elektronischer Form oder auf Papier ein Protokoll der visuellen Untersuchung unter Angabe der Art des entdeckten Teilchens oder Defektes sowie auch seiner Position auf dem Substrat.

Der zweite Unterschritt besteht darin, daß an einer zweiten Arbeitsstation umfassend ein hochauflösendes Mikroskop das im ersten Unterschritt erstellte Protokoll auf die Position des Defektes oder Teilchens auf dem Substrat hin ausgewertet wird. Da bei der manuell durchgeführten Schräglichtkontrolle kein exaktes Koordinatengitter durch das Sichtglas zur Verfügung steht, sind die Positionsangaben naturgemäß ungenau und oftmals fehlerbehaftet. Das Auffinden der betreffenden Defekt- oder Teilchenposition auf dem Substrat in dem hochauflösenden Mikroskop beruht gleichfalls auf der subjektiven Beurteilung der Positionsangabe durch den Bediener des Mikroskops. Daher kann es vorkommen, daß bei diesem Schritt eine Positionsbestimmung neu durchgeführt werden muß.

Darüberhinaus entsteht ein Nachteil dadurch, daß der Datentransfer des Protokolls sowie der Transport des Substrates von der ersten Arbeitsstation zur zweiten Arbeitsstation mit einem erhöhten Aufwand an Zeit und Kosten sowie mit einer Fehleranfälligkeit verbunden ist.

Es ist die Aufgabe der vorliegenden Erfindung, die Qualität des Herstellungsprozesses von Substraten wie Halbleiterwafern oder Masken/Retikeln durch eine verbesserte Defekt- und Teilchenkontrolle zu verbessern und den dafür benötigten Zeit- und Kostenaufwand zu reduzieren.

Die Aufgabe wird gelöst durch eine Mikroskopanordnung zur Inspektion eines Substrates mit den Merkmalen des Anspruchs 1. Weitere vorteilhafte Ausgestaltungen der Erfindung sind den untergeordneten Ansprüchen 2 bis 6 zu entnehmen.

Gemäß der vorliegenden Erfindung werden die bisher in zwei verschiedenen Arbeitsstationen verwendeten optischen Geräte zur Durchführung der Defekt- und Teilchenkontrolle in einem gemeinsamen Gerät realisiert. Eine solche Anordnung zur Inspektion eines Substrates umfaßt eine Beleuchtungsvorrichtung sowie gemäß einer vorzugsweisen Ausgestaltung ein Sichtglas zur Durchführung der Schräglichtkontrolle sowie das hochauflösende Mikroskop zur Durchführung der Defekt- beziehungsweise Teilchenklassifikation. Erfindungsgemäß sind beide Geräte an einer gemeinsamen Halterung der Anordnung fixiert. Ein Substrathalter, welcher der Handhabung des Substrates dient, ist dabei an der Halterung entlang wenigstens einer Koordinatenrichtung verfahrbar angebracht.

Die Mikroskopanordnung umfaßt auch eine Vorrichtung zum Verfahren des Substrathalters. Es kann sich hierbei beispielsweise um ein elektrischen Motor handeln, welcher den beispielsweise an einer Schiene auf Rollen entlang laufenden Substrathalter bewegen kann. Es sind erfindungsgemäß aber auch andere Verfahrmechanismen denkbar, wobei aufgrund der oft vorhandenen Reinraumbedingungen Mechanismen mit geringstem Abrieb der Vorzug gegeben wird.

Die Beleuchtungsvorrichtung dient der Ausleuchtung des Substrates während der Schräglichtkontrolle. Sie ist zu unterscheiden von einer weiteren Beleuchtungsvorrichtung, welche oftmals den zweiten Sichtbereich des Mikroskops ausleuchtet. Durch sie und das Sichtglas wird ein erster Sichtbereich definiert, in welchem die Schräglichtkontrolle ausgeführt werden kann. Vorzugsweise besitzt er wenigstens die Ausdehnung eines Waferdurchmessers, damit der Wafer vollflächig visuell inspiziert werden kann. Die Raumtiefe des ersten Sichtbereiches ist vorzugsweise von der gleichen Dimension, derzeit also oberhalb von 300 mm bis etwa 500 mm, um Spielraum für Bewegungen des Wafers relativ zum visuellen Beobachter zu ermöglichen.

Bei dem Sichtglas kann es sich erfindungsgemäß um eine Glasscheibe, eine Lupe oder um ein nur gering auflösendes Linsensystem handeln. Aufgrund der stetig wachsenden Anforderungen an die Reinraumbedingungen ist die Mikroskopanordnung vorzugsweise von einem Gehäuse umgeben, mittels welchem die Dichte kontaminierender Teilchen in seinem Innern gesenkt werden kann, so daß ein sog. Mini-environment entsteht. Damit dennoch die visuelle Kontrolle ermöglicht wird, ist erfindungsgemäß eine einfache Glasscheibe vorgesehen, durch welche hindurch ein visueller Beobachter das Substrat in dem ersten Sichtbereich innerhalb der Mikroskopanordnung inspizieren kann.

Das hochauflösende Mikroskop steht in Relation zu einem zweiten Sichtbereich, innerhalb dessen eine beliebige Struktur durch das Mikroskop hindurch mit scharfen Kontrast abgebildet werden kann.

Kennzeichnend für die Vorrichtung zum Verfahren des Substrathalters ist, daß mit ihr der Substrathalter nicht nur innerhalb des zweiten Sichtbereiches, sondern auch zwischen einer ersten Position im ersten Sichtbereich und einer zweiten Position im zweiten Sichtbereich verfahren werden kann.

Das Sichtglas besitzt einen großen Durchmesser und eine vergleichsweise große Brennweite, so daß neben dem großen Öffnungswinkel des Sichtbereiches eine im Vergleich zum Mikroskop große Ausdehnung des Sichtbereiches unter dem Sichtglas vorliegt. In dem Falle, daß das Sichtglas nur eine Glasscheibe ohne eine Vergrößerung umfaßt, kann der Sichtbereich auch durch seitliche Abdeckungen wie etwa der im Ausführungsbeispiel gezeigte, nach unten hin geöffnete Kasten begrenzt sein.

Im Unterschied dazu besitzt das Mikroskop einen vergleichsweise geringen Tiefenschärfebereich, so daß der zugehörige zweite Sichtbereich eine nur geringe Ausdehnung beträgt. Da der zweite Sichtbereich somit sehr nahe an der Objektivlinse des Mikroskops gelegen ist, würde eine direkte Betrachtung eines darin eingebrachten Substrats durch das Sichtglas durch die körperliche Ausdehnung des Mikroskops selbst behindert werden. Auf vorteilhafte Weise löst die Vorrichtung zum Bewegen des Substrathalters dieses Problem, indem das Sichtglas und das Mikroskop an der Halterung derart angeordnet werden, daß der erste und der zweite Sichtbereich neben- oder untereinander angeordnet sind und die Vorrichtung zum Bewegen des Substrathalters diesen jeweils durch Positionen in dem ersten und dem zweiten Sichtbereich verfahren kann.

Beide Kontrollen, die Schräglichtkontrolle und die hochauflösende Mikroskopkontrolle können somit unmittelbar aufeinanderfolgend unter Benutzung eines gemeinsamen Substrathalters durchgeführt werden. Da das Substrat nicht vom Substrathalter genommen werden muß, verbleibt für beide Kontrollen die Orientierung des Substrates auf dem Substrathalter die gleiche, so daß eine Zuordnung von Teilchen oder Defekten zu Positionen reproduzierbar wird. Weder führt eine zeitliche noch eine räumliche Trennung der beiden Kontrollen zu dem Erfordernis des Erstellens eines Protokolls. Der gleiche Bediener kann die unmittelbar aufeinanderfolgenden Arbeitsschritte ausführen.

Gemäß der vorliegenden Erfindung umfaßt die Mikroskopanordnung eine Drehvorrichtung zum Rotieren und/oder eine Vorrichtung zum Kippen bzw. Neigen des Substrathalters. Vorteilhaft ist eine solche Vorrichtung vor allem für den ersten Sichtbereich, in welchem die Schräglichtkontrolle durchgeführt wird. Durch Beugung reflektiertes Licht kann je nach Ausrichtung der Strukturen auf dem Substrat beispielsweise durch das Sichtglas oder gerade von diesem abgelenkt werden. Damit lassen sich leichter Defekte, wie etwa sog. Fokus-spots auf dem Substrat erkennen.

Gemäß einer vorteilhaften Ausgestaltung überlappen sich die Sichtbereiche des Sichtglases und des Mikroskops. Somit gibt es erfindungsgemäß eine Position, in welcher beide Vorrichtungen, das Sichtglas und das Mikroskop jeweils eine scharfe Abbildung von Strukturen auf dem Substrat in dem Sichtbereich bewirken können. Ist dieser Überlappbereich aufgrund der vorgenannten Gründe nur sehr klein, so ist es dennoch möglich, durch ein Bewegen des Substrathalters mittels der Vorrichtung zum Bewegen des Substrathalters unter Beachtung einer gefundenen Position eines Teilchens oder Defektes diese Position unmittelbar im Mikroskop wieder zu finden. Vorteilhafterweise ist dazu kein Datentransfer notwendig.

Die Koordinatenrichtungen, entlang derer der Substrathalter von einem Sichtbereich in den anderen Sichtbereich gefahren werden kann, liegt gemäß einer weiteren Ausgestaltung der vorliegenden Erfindung parallel zur optischen Achse des Mikroskops. Der Vorteil ist, daß beim Verfahren des Substrats eine eingestellte Position in der Mitte des Sichtbereiches des Mikroskops nicht aus dessen Sichtbereich herausgefahren wird.

Die Vorgabe einer Koordinatenrichtung ist erfindungsgemäß nicht im Sinne einer langen Geraden zu verstehen, entlang derer der Substrathalter verschoben wird. Es ist vielmehr auch möglich, daß der Substrathalter entlang einer gekrümmten Kurve bewegt wird.

Gemäß einer weiteren vorteilhaften Ausgestaltung sind die Sichtbereiche des Sichtglases und des Mikroskops nebeneinander angeordnet, so daß der Substrathalter beziehungsweise das Substrat im wesentlichen in der von ihm aufgespannten Ebene bewegt wird. Vorteilhafterweise ist der Substrathalter vermittels der Vorrichtung zum Bewegen des Substrathalters in drei voneinander unabhängigen Richtungen verfahrbar an der Halterung angebracht. Mit einer entsprechenden computergesteuerten Bewegung des Substrathalters durch die beiden Sichtbereiche hindurch können dabei besonders vorteilhafte dreidimensionale Kurven für den Übergang von der makroskopischen zu der mikroskopischen Kontrolle durchfahren werden.

Gemäß einer vorteilhaften Ausgestaltung ist die die dreidimensionale Bewegung steuernde Steuereinheit mit dem Fokussiersystem des Mikroskops verbunden, so daß sich dieses als Funktion eines übermittelten Abstandes des Substrathalters von der Optik des Mikroskops einstellen kann.

Zum besseren Verständnis soll die vorliegende Erfindung nun anhand zweier Ausführungsbeispiele mit Hilfe einer Zeichnung näher erläutert werden. Darin zeigen:
- Figur 1: einen Querschnitt durch ein erstes Ausführungsbeispiel bei der Durchführung der Mikroskopkontrolle,
- Figur 2: einen Querschnitt durch ein erstes Ausführungsbeispiel während der Durchführung der Schräglichtkontrolle,
- Figur 3: einen Querschnitt durch ein zweites Ausführungsbeispiel während der Mikroskopkontrolle,
- Figur 4: einen Querschnitt durch ein zweites Ausführungsbeispiel während der Schräglichtkontrolle.

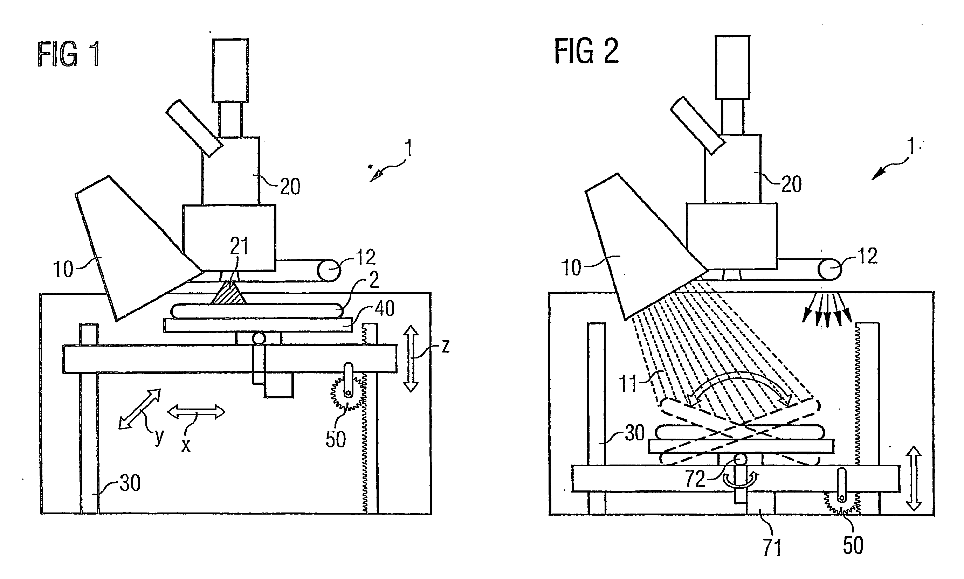

Ein erstes Ausführungsbeispiel der vorliegenden Erfindung ist in Figur 1 dargestellt. Die Mikroskopanordnung 1 umfaßt ein Mikroskop 20 mit einem ersten Sichtbereich 21, innerhalb dessen Strukturen auf dem Substrat 2 durch das Mikroskop 20 mit hohem Kontrast abgebildet werden. Figur 1 zeigt den Zustand der Mikroskopanordnung während der Durchführung der Mikroskopkontrolle. Dazu ist das Substrat 2 auf einem Substrathalter 40 aufliegend in den Sichtbereich 21 des Mikroskops 20 gefahren worden. Zum Verfahren des Substrathalters 40 dient eine Vorrichtung 50 zum Bewegen des Substrathalters 40. In dem vorliegenden Ausführungsbeispiel wird der Substrathalter 40 entlang der in Figur 1 vertikal ausgerichteten optischen Achse des Mikroskops 20 verfahren (Z-Achse). Darüber hinaus ist der Substrathalter 40 zum Zwecke der Feinadjustierung in dem Mikroskop 20 auch in der durch das Substrat 2 aufgespannten Ebene verfahrbar. Hierzu dienen in Figur 1 nicht gezeigte Mikromotoren. Auch eine weitere der Feinadjustierung in Richtung der optischen Achse dienende Vorrichtung zum Einstellen eines optimalen Fokusabstandes für den Substrathalter 40, welcher von der Vorrichtung 50 zum Bewegen des Substrathalters zwischen den Sichtbereichen verschieden ist, ist in der Mikroskopanordnung dieses Ausführungsbeispiels vorgesehen. Die Bewegungsvorrichtungen für die Feinadjustierung sind nicht dazu ausgelegt, den Substrathalter 40 zwischen den Sichtbereichen des Sichtglases 10 und des Mikroskops 20 zu verfahren. Sie besitzen lediglich einen für das Mikroskop 20 ausgelegten Spielraum für die Feinadjustierung.

Das Mikroskop 20 und das Sichtglas 10 sind an einer Halterung 30 angebracht. Die Vorrichtung 50 zum Bewegen des Substrathalters 40 führt eine Bewegung des Substrathalters 40 relativ zur Halterung 30 aus. Wie in Figur 2 dargestellt ist, kann die Vorrichtung 50 zum Bewegen des Substrathalters 40 auch einen ersten Sichtbereich 11 anfahren, welcher dem Sichtglas 10 zugeordnet ist. Das Sichtglas 10 umfaßt ein einfaches Lupenglas. Zur Durchführung der Schräglichtkontrolle umfaßt die Mikroskopanordnung 1 auch eine Beleuchtungsvorrichtung 12, mit welcher das Substrat 2 auf dem Substrathalter 40 beleuchtet wird. Mittels einer Kippvorrichtung 72 sowie einer Vorrichtung 71 zum Rotieren des Substrathalters können die Orientierung der Strukturen auf dem Substrat 2 sowie der Einfallswinkel des eingestrahlten Lichtes variiert werden.

Im allgemeinen wird eine Inspektion zur Detektion von Teilchen oder Defekten auf einem Substrat, hier einem Halbleiterwafer, zunächst mit der makroskopischen Schräglichtkontrolle beginnen, welche in Figur 2 dargestellt ist, wonach im Falle der Detektion beispielsweise eines Teilchens auf dem Substrat mittels der Vorrichtung 50 zum Bewegen des Substrathalters 40 das Substrat in Richtung auf den Sichtbereich 21 des Mikroskops 20 gefahren. Der Bediener erkennt die Position des detektierten Teilchens und kann durch eine geeignete Bewegung des Substrathalters 2 in X-Y-Richtung die gefundene Teilchenposition auf dem Substrat 2 genau in den Sichtbereich 21 des Mikroskops 20 fahren. Er kann dies durchführen, ohne das Substrat 2 vom Substrathalter 40 abnehmen zu müssen. Er kann au-ßerdem den Schritt des Verfahrens in X-Y-Richtung über das Sichtglas 10 kontrollieren, solange die Position des Substrathalters 40 noch im Sichtbereich 11 liegt.

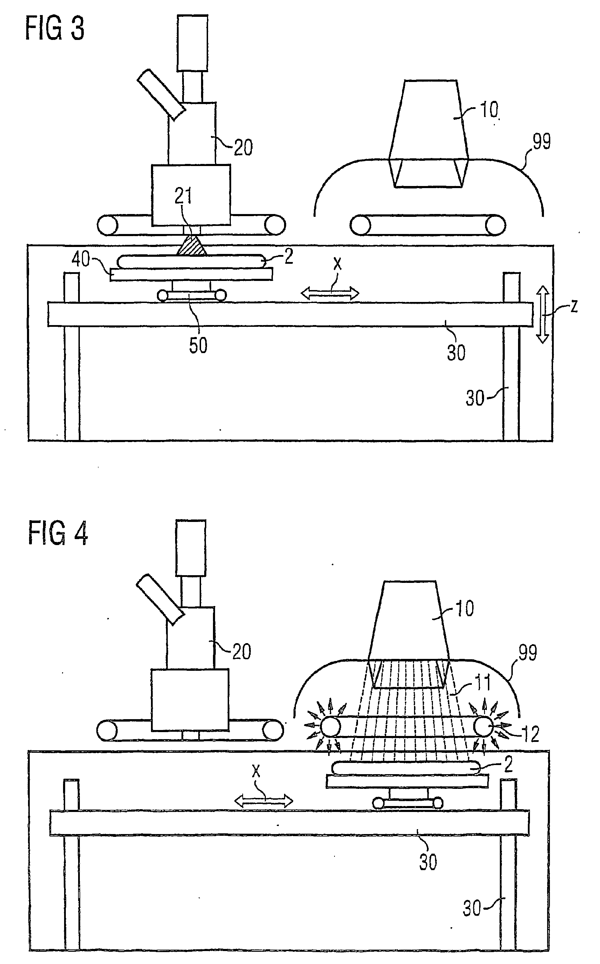

Ein zweites Ausführungsbeispiel der vorliegenden Erfindung ist in Figur 3 gezeigt. In diesem Ausführungsbeispiel sind das Mikroskop 20 und das Sichtglas 10 nebeneinander angeordnet und ihre Sichtbereiche überlappen sich im Gegensatz zum vorherigen Beispiel nicht. Eine Vorrichtung 50 zum Bewegen des Substrathalters 40 ist auf Rollen gelagert, welcher in einer Schiene auf der Halterung 30 laufen. Somit kann das auf dem Substrathalter 40 aufliegende Substrat 2 von einer in Figur 3 dargestellten Mikroskopkontrolle in einem Sichtbereich 21 des Mikroskops 20 zur Schräglichtkontrolle unter dem Sichtglas 10 in dem Sichtbereich 11, welcher von der Beleuchtungsvorrichtung 12 ausgeleuchtet wird, hin und her verfahren werden.

Neben dem vereinfachten Aufbau der Anordnung besteht ein weiterer Vorteil dieser in Figur 3 und 4 gezeigten Anordnung darin, daß ein Bediener das Substrat 2 leichter verfahren kann, während es in beiden Positionen in den jeweiligen Sichtbereichen 11, 21 für ihn leichter zugänglich ist. Üblicherweise wird die Schräglichtkontrolle zuerst durchgeführt, gefolgt von der Mikroskopkontrolle, mittels dieser Anordnung ist es aber auch möglich, den Substrathalter 40 durch die Vorrichtung 50 ständig hin und her zu bewegen, um beispielsweise für jedes Teilchen, das detektiert wurde, erneut eine Klassifikation vornehmen zu können. Ein solches Vorgehen wäre gemäß dem Stand der Technik unpraktikabel, da der zeitliche und personelle Aufwand sehr hoch wäre.

An dem Sichtglas 20 dieses Ausführungsbeispiels sind seitlich Reflektoren 99 angebracht, welche den visuellen Beobachter vor der Einstrahlung durch die Beleuchtungsvorrichtung schützen und zudem das Licht auf das Substrat zurückwerfen.

### Bezugszeichenliste

- 1: Mikroskopanordnung
- 10: Sichtglas
- 11: erster Sichtbereich des Sichtglases
- 12: Beleuchtungsvorrichtung
- 20: Mikroskop
- 21: zweiter Sichtbereich des Mikroskops
- 30: Halterung
- 40: Substrathalter
- 50: Vorrichtung zum Bewegen des Substrathalters
- 71: Vorrichtung zum Rotieren des Substrathalters
- 72: Vorrichtung zum Verkippen/Neigen des Substrathalters
- 99: Reflektoren

## Patentansprüche

1. Mikroskopanordnung (1) zur Inspektion eines Substrates (2), umfassend
- ein Sichtglas (10) zum Auffinden eines makroskopischen Defektes auf einer Oberfläche eines Substrates (2) in einem ersten Sichtbereich (11),
- eine Beleuchtungsvorrichtung (12) zum Ausleuchten des Substrates in dem ersten Sichtbereich (11),
- ein Mikroskop (20) zur hochauflösenden Darstellung eines Ausschnittes auf der Oberfläche des Substrates (2) in einem zweiten Sichtbereich (21),
- wobei das Sichtglas (10) und das Mikroskop (20) derart zueinander angeordnet sind, daß sich der erste Sichtbereich (11) und der zweite Sichtbereich (21) wenigstens teilweise überlappen,
- eine Halterung (30), an welcher das Mikroskop (20) und das Sichtglas (10) fixiert sind,
- einen Substrathalter (40) zur Handhabung des Substrates (2), welcher an der Halterung (30) entlang wenigstens einer ersten Koordinatenrichtung (Z) verfahrbar angebracht ist,
- eine Vorrichtung (50) zum Verfahren des Substrathalters (40) entlang der Koordinatenrichtung zwischen wenigstens einer ersten Position innerhalb des ersten Sichtbereiches (11) und einer zweiten Position innerhalb zweiten Sichtbereiches (21),
- eine Vorrichtung zum Drehen (71) und/oder eine Vorrichtung zum Neigen (72) des Substrathalters (40).

2. Mikroskopanordnung (1) nach Anspruch 1,
**dadurch gekennzeichnet, daß**
- das Mikroskop (20) eine optische Achse aufweist, und
- die wenigstens erste Koordinatenrichtung (Z), in welcher der Substrathalter (40) verfahrbar ist, mit der optischen Achse übereinstimmt.

3. Mikroskopanordnung (1) nach Anspruch 1 oder 2,
**dadurch gekennzeichnet, daß** das Sichtglas (10) ein zuschaltbares Vergrößerungsglas umfaßt.

4. Mikroskopanordnung (1) nach einem der Ansprüche 1 bis 3,
**gekennzeichnet durch**
- ein Gehäuse, in welchem wenigstens das Mikroskop (20), der Substrathalter (40), der erste (11) und der zweite Sichtbereich (21) angeordnet sind, und
- ein Mittel zur Herstellung eines Raumklimas mit einer verminderten Anzahl kontaminierender Teilchen, wobei das Sichtglas (10) eine Fensteröffnung in dem Gehäuse bildet.

## Revendications

1. Système (1) de microscope pour le contrôle d'un substrat (2), comprenant
- un verre (10) de vision pour trouver un défaut macroscopique sur une surface d'un substrat (2) dans un premier champ (11) de vision ;
- un dispositif (12) d'éclairage pour éclairer le substrat dans le premier champ (11) de vision ;
- un microscope (20) de représentation à grande résolution d'une partie de la surface du substrat (2) dans un deuxième champ (21) de vision ;
- dans lequel le verre (10) de vision et le microscope (20) sont disposés l'un par rapport l'autre de manière à ce que le premier champ (11) de vision et le deuxième champ (21) de vision se chevauchent au moins en partie ;
- une fixation (30) à laquelle le microscope (20) et le verre (10) de vision sont fixés ;
- un porte-substrat (40) destiné à la manipulation du substrat (2) est monté de manière mobile sur la fixation (30) le long d'au moins une première direction (Z) de coordonnées ;
- un dispositif (50) pour déplacer le porte-substrat (40) le long de la direction de coordonnées entre au moins une première position à l'intérieur du premier champ (11) de vision et une deuxième position à l'intérieur du deuxième champ (21) de vision ;
- un dispositif pour faire tourner (71) et/ou un dispositif pour incliner (72) le porte-substrat (40).

2. Système (1) de microscope suivant la revendication 1, **caractérisé en ce que**
- le microscope (20) a un axe optique ; et
- la au moins première direction (Z) de coordonnées, dans laquelle le porte-substrat (40) peut être déplacé, coïncide avec l'axe optique.

3. Système (1) de microscope suivant la revendication 1 ou 2, **caractérisé en ce que** le verre (10) de vision comprend un verre de grossissement qui peut être monté en plus.

4. Système (1) de microscope suivant l'une des revendications 1 à 3, **caractérisé par**
- un boîtier dans lequel sont montés au moins le microscope (20), le porte-substrat (40), le premier champ (11) de vision et le deuxième champ (21)'de vision ; et
- au moins un moyen de production d'une climatisation d'un espace clos ayant un nombre amoindri de particules polluantes, le verre (10) de vision formant une ouverture de hublot dans le boîtier.

## Claims

1. A microscope arrangement (1) for inspecting a substrate (2), comprising
- a sight glass (10) for finding a macroscopic defect on a surface of a substrate (2) in a first visual range (11),
- an illuminating system (12) for illuminating the substrate in the first visual range (11),
- a microscope (20) for a high-resolution representation of a section on the surface of the substrate (2) in a second visual range (21),
- the sight glass (10) and the microscope (20) being arranged relative to one another in such a way that the first visual range (11) and the second visual range (21) overlap at least partially,
- a holder (30) on which the microscope (20) and the sight glass (10) are fixed,
- a substrate pallet (40), for handling the substrate (2), which is fitted on the holder (30) such that it can move along at least one first coordinate direction (Z),
- an apparatus (50) for moving the substrate pallet (40) along the coordinate direction between at least a first position within the first visual range (11) and a second position within the second visual range (21) and
- an apparatus for rotating (71) and/or an apparatus for inclining (72) the substrate pallet (40).

2. The microscope arrangement (1) as claimed in claim 1,
wherein
- the microscope (20) has an optical axis, and
- the at least first coordinate direction (Z) in which the substrate pallet (40) can be moved coincides with the optical axis.

3. The microscope arrangement (1) as claimed in claim 1 or 2, wherein the sight glass (10) comprises a magnifying glass that can be cut in.

4. The microscope arrangement (1) as claimed in one of claims 1 to 3, defined by
- a housing in which at least the microscope (20), or the substrate pallet (40), the first (11) and the second visual range (21) are arranged, and
- a means for producing a room climate with a reduced number of contaminating particles, the sight glass (10) forming a window opening in the housing.
